(19) Europäisches Patentamt
European Patent Office
Office européen des brevets

(11) EP 4 155 326 A1

(12) **EUROPEAN PATENT APPLICATION**
published in accordance with Art. 153(4) EPC

(43) Date of publication:
**29.03.2023 Bulletin 2023/13**

(21) Application number: **21809038.9**

(22) Date of filing: **20.05.2021**

(51) International Patent Classification (IPC):
***C08F 8/12*** *(2006.01)* ***C08F 218/08*** *(2006.01)*
***C08L 101/16*** *(2006.01)*

(52) Cooperative Patent Classification (CPC):
**C08F 8/12; C08F 218/08; C08L 101/16**

(86) International application number:
**PCT/JP2021/019087**

(87) International publication number:
**WO 2021/235507 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2020 JP 2020088860**

(71) Applicant: **Mitsubishi Chemical Corporation**
**Chiyoda-ku**
**Tokyo 100-8251 (JP)**

(72) Inventors:
- **AOYAMA Masato**
  **Tokyo 100-8251 (JP)**
- **SAKAIDA Masanori**
  **Tokyo 100-8251 (JP)**
- **KONISHI Yohei**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **MODIFIED ETHYLENE/VINYL ALCOHOL RESIN AND GAS-BARRIER MATERIAL**

(57) A modified EVOH resin having a primary hydroxyl group in its side chain. In the modified EVOH resin, the proportion of an ethylene structural unit is 1 to 16.5 mol %, and the proportion of a structural unit containing the side-chain primary hydroxyl group is not less than 2.5 mol %.

EP 4 155 326 A1

## Description

TECHNICAL FIELD

The present disclosure relates to a modified ethylene-vinyl alcohol resin, more specifically to a modified ethylene-vinyl alcohol resin containing a specific proportion of a side-chain primary hydroxyl group.

BACKGROUND ART

Conventionally, ethylene-vinyl alcohol resins containing 20 to 60 mol % of an ethylene structural unit (such an ethylene-vinyl alcohol resin will hereinafter sometimes be referred to as "EVOH resin") have transparency, gas barrier property, aroma retaining property, solvent resistance, and oil resistance and, therefore, are used for food packaging materials (NPL 1). These properties allow for reduction in food losses.

On the other hand, there is a need for reducing environmental loads in recent years, but the EVOH resin containing 20 to 60 mol % of the ethylene structural unit is less biodegradable. From the viewpoint of further reduction in environmental loads (e.g., from the viewpoint of marine problems), there is a demand for a gas barrier resin having an excellent biodegradability.

NPL 2 reports that an EVOH resin containing 4 to 10 mol % of the ethylene structural unit as an example of the biodegradable gas barrier resin has a substrate specificity of a polyvinyl alcohol dehydrogenase, which is an enzyme derived from microbes.

A mechanism for the biodegradation of a polyvinyl alcohol by the polyvinyl alcohol dehydrogenase is such that the polyvinyl alcohol is biodegraded by oxidizing a sequence of vinyl alcohol units, as stated in NPL 3.

In PTL 1, an attempt to improve the biodegradability is reported such that an EVOH resin is structure-designed as having an ethylene structural unit content of 2 to 19 mol %, a polymerization degree of 200 to 2,000, a saponification degree of 80 to 99.99 mol %, and a total carboxyl group and lactone ring content of 0.02 to 0.4 mol % to be thereby imparted with a moderate hydrophilicity for the improvement of the biodegradability.

RELATED ART DOCUMENT

PATENT DOCUMENT

PTL 1: JP-A-2000-309607

NON-PATENT DOCUMENT

NPL 1: New Development of Packaging Material having Gas Barrier Properties and Aroma Retaining Properties, Chapter 2: Ethylene Vinyl Alcohol Copolymer Resin, 1997, Toray Research Center, Inc.,
NPL 2: Biosci. Biotech. Biochem. Vol. 59, No. 7, page 1229 (1995)
NPL 3: Macromolecule, Vol. 32, page 7753 (1999)

SUMMARY

In NPL 2, however, there is no statement on the biodegradability (on what percentage of the EVOH resin was biodegraded in certain days), though the evaluation was made for a reaction rate (Vmax) and a Michaelis-Menten constant (Km) on an infinite substrate. Therefore, further improvement of actual biodegradability is required.

Further, the biodegradation mechanism stated in NPL 3 implies that the attempt is made to improve the biodegradability only by increasing the sequence number of vinyl alcohol units, but not by copolymerization with some other structural units.

Furthermore, the carboxyl group or lactone ring-containing structure and the carboxyl group and lactone ring content of the EVOH resin disclosed in PTL 1 are less likely to impart the EVOH resin with hydrophilicity, so that a longer period of time tends to be required until the biodegradation begins. Therefore, further improvement is required.

In view of the foregoing, the present disclosure provides an EVOH resin which is excellent in biodegradability and gas barrier property.

The inventors of the present disclosure conducted intensive studies in view of the foregoing. As a result, the inventors found that, where the proportion of the ethylene structural unit in the EVOH resin is set within a specific range and a specific proportion of a structural unit having a side-chain primary hydroxyl group is introduced into the EVOH

resin, it is possible to control the hydrophilicity of the modified EVOH resin to thereby permit the biodegrading microbes to easily access the modified EVOH resin, and the problems described above can be solved.

In the EVOH resin, hydroxyl groups are bonded directly to the polymer main chain as secondary hydroxyl groups. Therefore, the EVOH resin is sterically complicated in structure around the hydroxyl groups. This makes it difficult for the microbes to access the polymer main chain. Where the EVOH resin has primary hydroxyl groups in its side chains, in contrast, the hydroxyl groups are present apart from the main chain. In addition, the primary hydroxyl groups are less liable to cause steric hinderance therearound as compared with secondary and tertiary hydroxyl groups and, therefore, the microbes can easily access the polymer main chain. This supposedly contributes to solving the problems described above.

Specifically, the present disclosure provides the following [1] to [5]:

[1] A modified EVOH resin having a primary hydroxyl group in its side chain, wherein the proportion of an ethylene structural unit in the modified EVOH resin is 1 to 16.5 mol %, wherein the proportion of a structural unit containing the side-chain primary hydroxyl group is not less than 2.5 mol %.

[2] The modified EVOH resin according to [1], which has a saponification degree of not less than 99 mol %.

[3] The modified EVOH resin according to [1] or [2], wherein sodium acetate is present in an amount of less than 0.7 mass %.

[4] The modified EVOH resin according to any one of [1] to [3], wherein a solution prepared by dissolving the modified EVOH resin at a concentration of 4 mass % in a solvent containing water and 2-propanol in a mixing ratio (mass ratio) calculated from the following expression (1) has a transmittance of not less than 70% as measured at 30°C at 430 nm with an optical path length of 20 mm:

$$\text{(Water)} : \text{(2-Propanol)} = (100 - X) : X \quad .....(1)$$

wherein X = 3.4 × (Proportion of ethylene structural unit) - 5 × (Proportion of primary hydroxyl group-containing structural unit) - 20 and, if X is negative, X = 0.

[5] A gas barrier material having a layer made of the modified EVOH resin according to any one of [1] to [4].

The modified EVOH resin according to the present disclosure is the modified EVOH resin having the side-chain primary hydroxyl group. In the modified EVOH resin, the proportion of the ethylene structural unit is 1 to 16.5 mol %, and the proportion of the structural unit containing the side-chain primary hydroxyl group is not less than 2.5 mol %. Therefore, the modified EVOH resin is excellent in biodegradability while having a gas barrier property.

## BRIEF DESCRIPTION OF DRAWINGS

FIG. 1 shows a $^{1}$H-NMR spectrum of a modified EVOH resin of Example 1.

FIG. 2 shows a $^{13}$C-NMR spectrum of the modified EVOH resin of Example 1.

FIG. 3 shows a $^{1}$H-NMR spectrum of a modified ethylene-vinyl ester copolymer which is an intermediate product of a modified EVOH resin of Example 6.

FIG. 4 shows a $^{1}$H-NMR spectrum of the modified EVOH resin of Example 6.

## DESCRIPTION OF EMBODIMENTS

Preferred embodiments of the present disclosure will hereinafter be described in detail by way of example.

In the present disclosure, an expression "α and/or β (wherein α and β are each a given structure or a given component)" has three meanings including α alone, β alone, and a combination of α and β.

The EVOH resin is typically a thermoplastic resin obtained by saponifying an ethylene-vinyl ester copolymer which is a copolymer of ethylene and a vinyl ester monomer.

The modified EVOH resin according to the present disclosure contains a specific proportion of a primary hydroxyl group in its side chain, and specifically is an EVOH resin having a structural unit represented by the following general formula (1):

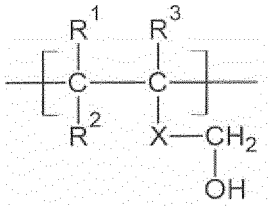

.....(1)

wherein $R^1$ to $R^3$ are each independently a hydrogen atom or an organic group, and X is a single bond or a bonding chain.

$R^1$ to $R^3$ are not particularly limited, as long as they are each a hydrogen atom or an organic group. Examples of the organic group include hydrocarbon groups such as alkyl groups, alkenyl groups, alkynyl groups, phenyl group, and naphthyl group (these hydrocarbon groups may each have a substituent such as hydroxyl group, fluorine, chlorine or bromine).

X which bonds a primary hydroxyl group structure to a polymer main chain is a single bond or a bonding chain. The bonding chain is not particularly limited, but examples of the bonding chain include hydrocarbons such as alkylenes, alkenylenes, alkynylenes, phenylene, and naphthylene (these hydrocarbons may each have a substituent such as hydroxyl group, fluorine, chlorine or bromine), oxyalkylenes, oxyalkenylenes, oxyalkynylenes, oxyphenylene, and oxynaphthylene each having an ether bond for bonding to the polymer main chain (these hydrocarbons may each have a substituent such as hydroxyl group, fluorine, chlorine or bromine), -CO-, $-CO(CH_2)_mCO-$, $-CO(CH_2)_mCOR^4-$, $-NR^5-$, and $-CONR^5-$ (wherein $R^4$ and $R^5$ are each independently a given substituent and are preferably each a hydrogen atom or an alkyl group, and m is a natural number).

Exemplary methods for preparing the modified EVOH resin according to the present disclosure include:

(I) a method in which a monomer containing a side-chain primary hydroxyl group and/or a monomer containing a side-chain primary hydroxyl group protected with an ester or the like are copolymerized with ethylene and a vinyl ester monomer, and then the resulting copolymer is saponified for deprotection; and
(II) a method in which a copolymer of ethylene and a vinyl ester monomer is first saponified to provide an EVOH resin, and then the EVOH resin is post-modified so as to generate a side-chain primary hydroxyl group therein. Of these, the method (I) is preferred from the viewpoint of productivity.

The production methods for the modified EVOH resin according to the present disclosure will hereinafter be described.

In the method (I), ethylene and the vinyl ester monomer are copolymerized with the monomer containing the side-chain primary hydroxyl group and/or the monomer containing the side-chain primary hydroxyl group protected with the ester or the like.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. These may be each used alone, or two or more of these may be used in combination. Of these, vinyl acetate is preferred from the viewpoint of economy.

Examples of the monomer containing the side-chain primary hydroxyl group to be used in the method (I) include monohydroxyalkyl group-containing monomers such as allyl alcohol, 3-buten-1-ol, 4-penten-1-ol, 5-hexen-1-ol, 6-hepten-1-ol, and methallyl alcohol, and dihydroxyalkyl group-containing monomers such as 2-methylene-1,3-propanediol, 3,4-diol-1-butene, 4,5-diol-1-pentene, 4,5-diol-3-methyl-1-pentene, 5,6-diol-1-hexene, and glycerol monoallyl ether. These may be each used alone, or two or more of these may be used in combination.

Further, examples of the monomer containing the side-chain primary hydroxyl group protected with the ester or the like (hereinafter sometimes referred to as "the monomer containing the hydroxyl group protected with the ester or the like") to be used in the method (I) include acetic acid esters of the monomers having the side-chain primary hydroxyl group, and specific examples thereof include monoacetoxyalkyl group-containing monomers such as allyl acetate, 3-butenyl acetate, 4-pentenyl acetate, 5-hexenyl acetate, 6-heptenyl acetate, and methallyl acetate, and diacetoxyalkyl group-containing monomers such as 2-methylene-1 ,3-propanediol diacetate, 3,4-diacetoxy-1-butene, 4,5-diacetoxy-1-pentene, 4,5-diacetoxy-3-methyl-1-pentene, and 5,6-diacetoxy-1-hexene, and 3-allyloxy-1,2-propanediol diacetate. These may be each used alone, or two or more of these may be used in combination.

In the method (I), the monomer containing the side-chain primary hydroxyl group and the monomer containing the hydroxyl group protected with the ester or the like can be used in combination so as to be copolymerized with ethylene and the vinyl ester monomer.

Of these, the monomer containing the hydroxyl group protected with the ester or the like is preferred from the viewpoint of productivity, and the diacetoxyalkyl group-containing monomers are more preferred. Further, 3,4-diacetoxy-1-butene and 2-methylene-1,3-propanediol diacetate are still more preferred, and 3,4-diacetoxy-1-butene is particularly

preferred.

Where the 3,4-diacetoxy-1-butene is used as the comonomer in the method (I), for example, the modified EVOH resin resulting from the deprotection through the saponification or the like has a side-chain primary hydroxyl group-containing structural unit represented by the following general formula (2).

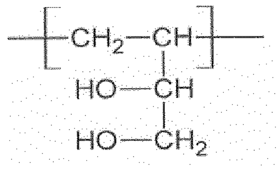

.....(2)

Where the 2-methylene-1,3-propanediol diacetate is used as the comonomer in the method (I), for example, the resulting modified EVOH resin has a side-chain primary hydroxyl group-containing structural unit represented by the following general formula (3).

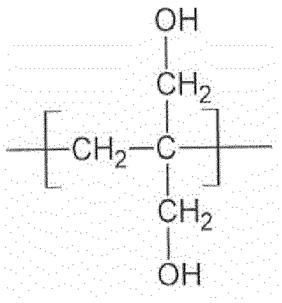

.....(3)

In the methods (I) and (II), a copolymerizable ethylenically unsaturated monomer may be used as a comonomer for the copolymerization as long as the effect of the present disclosure is not impaired.

Examples of the ethylenically unsaturated monomer include: olefins such as propylene, 1-butene, and isobutene; unsaturated acids such as acrylic acid, methacrylic acid, crotonic acid, phthalic acid (anhydride), maleic acid (anhydride), and itaconic acid (anhydride), salts of these unsaturated acids, and monoalkyl and dialkyl esters of these unsaturated acids each having a C1 to C18 alkyl group; acrylamide compounds such as acrylamide, N-alkylacrylamides each having a C1 to C18 alkyl group, N,N-dimethylacrylamide, 2-acrylamidopropanesulfonic acid and its salts, and acrylamidopropyldimethylamine and its acid salts and quaternary salts; methacrylamide compounds such as methacrylamide, N-alkylmethacrylamides each having a C1 to C18 alkyl group, N,N-dimethylmethacrylamide, and 2-methacrylamidopropanesulfonic acid and its salts; N-vinylamides such as N-vinylpyrrolidone, N-vinylformamide, and N-vinylacetamide; vinyl cyanates such as acrylonitrile and methacrylonitrile; vinyl ethers such as alkyl vinyl ethers each having a C1 to C18 alkyl group, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; and vinylsilanes. These may be each used alone, or two or more of these may be used in combination.

For the copolymerization reactions, known methods such as bulk polymerization, solution polymerization, suspension polymerization, dispersion polymerization, and emulsion polymerization are usable. Of these, the solution polymerization is preferably used, which allows for easy copolymerization control.

Where the solution polymerization is used for the copolymerization, examples of a solvent to be used for the solution polymerization include C1 to C5 lower alcohols such as methanol, ethanol, propanol, and butanol, and ketones such as acetone and 2-butanone. These may be each used alone, or two or more of these may be used in combination. Of these, methanol is preferably used for the easy control of the polymerization reaction. Where a copolymer having a lower polymerization degree is to be synthesized, 2-propanol is preferably used.

The amount of the solvent to be used may be properly selected in consideration of the polymerization degree of the intended modified EVOH resin and the chain transfer constant of the solvent. Where the solvent is methanol or 2-propanol, for example, the mass ratio (S/M) between the solvent (S) and the monomers (M) is preferably S/M = 0.01 to 10, more preferably S/M = 0.05 to 7.

Exemplary feeding methods to be used for feeding the comonomers for the solution polymerization include an initial batch feeding method, a divided feeding method, and a continuous feeding method such as Hanna method in which the monomers are fed in consideration of the reactivity ratio of the monomers.

A polymerization initiator is used for the copolymerization. Examples of the polymerization initiator include azo initiators such as 2,2'-azobisisobutyronitrile, 2,2'-azobis(2,4-dimethylvaleronitrile), and 2,2'-azobis(4-methoxy-2,4-dimethylvaleronitrile), and peroxide initiators such as acetyl peroxide, benzoyl peroxide, lauroyl peroxide, t-butyl peroxyneodecanoate, 1,1,3,3-tetramethylbutyl peroxyneodecanoate, diisopropyl peroxydicarbonate, and di-2-ethylhexyl peroxydicarbonate.

The amount of the polymerization initiator to be used cannot be unconditionally defined because the use amount varies depending on the type of the polymerization initiator, but may be properly selected according to the polymerization rate. Where 2,2'-azobisisobutyronitrile or t-butyl peroxyneodecanoate is used as the polymerization initiator, for example, the amount of the polymerization initiator is typically 10 to 2,000 ppm, preferably 50 to 1,000 ppm, based on the amount of the vinyl ester monomer.

The polymerization temperature for the copolymerization is preferably selected from a range between 40°C and the boiling point of the solvent according to the solvent and ethylene pressure to be used.

Further, the copolymerization may be allowed to proceed in the presence of a chain transfer agent, as long as the effect of the present disclosure is not impaired. Examples of the chain transfer agent include aldehydes such as acetaldehyde, propionaldehyde, and crotonaldehyde, and mercaptans such as 2-hydroxyethanethiol. These may be each used alone, or two or more of these may be used in combination. Of these, the aldehydes are preferably used. The amount of the chain transfer agent to be added for the copolymerization is decided according to the chain transfer constant of the chain transfer agent and the polymerization degree of the intended modified EVOH resin, and is generally preferably 0.1 to 10 parts by mass based on 100 parts by mass of the vinyl ester monomer.

The EVOH resin can be prepared by saponifying the ethylene-vinyl ester copolymer thus prepared.

A known saponification method can be employed for the saponification. For example, the ethylene-vinyl ester copolymer prepared in the aforementioned manner is dissolved in an alcohol or a water-containing alcohol, and is saponified with the use of a saponification catalyst.

Examples of the alcohol include C1 to C5 lower alcohols such as methanol, ethanol, and propanol. These may be each used alone, or two or more of these may be used in combination. Of these, methanol is preferred.

The concentration of the ethylene-vinyl ester copolymer in the alcohol is properly selected according to the viscosity thereof, and is typically 5 to 60 mass %.

Examples of the saponification catalyst include alkali catalysts including oxides and alcoholates of alkali metals such as sodium hydroxide, potassium hydroxide, sodium methylate, sodium ethylate, potassium methylate, and potassium ethylate; and acid catalysts such as sulfuric acid, hydrochloric acid, nitric acid, metasulfonic acid, zeolite, and cation exchange resin.

The temperature for the saponification is not particularly limited, but is preferably in a range of 20°C to 140°C. Where the proportion of the ethylene structural unit is 1 to 16.5 mol % as in the present disclosure, a particulate product is generated as the saponification proceeds. This indicates that the saponification reaction proceeds. Where a gel-like product is deposited at this time, the product may be pulverized. Thereafter, the resulting particulate product may be neutralized, washed, and dried as required. Thus, the modified EVOH resin can be prepared.

The washing is carried out in order to reduce the amount of the catalyst used for the saponification and the amount of the salt produced by the neutralization. Where sodium hydroxide, sodium methylate, sodium ethylate or the like is used as the saponification catalyst and acetic acid is used for the neutralized, for example, sodium acetate is produced by the neutralization. Therefore, the amount of sodium acetate remaining in the resulting modified EVOH resin can be adjusted by washing the produced particulate product. The washing degree is decided in consideration of the intended quality of the modified EVOH resin and the increase in the number of process steps and costs associated with the washing.

Exemplary washing liquids to be used for the washing include C1 to C5 lower alcohols such as methanol, ethanol, and propanol, and water. These may be each used alone, or two or more of these may be used in combination. Of these, methanol is preferred.

Further, the amount of the washing liquid to be used for the washing is preferably 4 to 8 parts by mass based on 1 part by mass of the produced particulate product (i.e., a bath ratio of 4 to 8). The temperature for the washing is preferably 20°C to 70°C. The washing period is preferably 0.5 to 3 hours. The number of times of the washing is preferably 2 to 6. The washing conditions are preferably such that the washing operation is performed four to six times with a bath ratio of 4, three to five times with a bath ratio of 5, or twice to three times with a bath ratio of 8 for efficient utilization of the washing liquid.

In general, the EVOH resin is ethylenically modified and, therefore, is correspondingly less affinitive for water than the ordinary vinyl alcohol resin, while sodium acetate is more soluble in water. Therefore, the amount of sodium acetate can be reduced by utilizing a smaller amount of a water-containing solvent as the washing liquid for the washing. In contrast, the modified EVOH resin according to the present disclosure, which contains a smaller proportion of the ethylene structural unit than the ordinary EVOH resin and additionally contains the side-chain primary hydroxyl group-containing structural unit, is highly affinitive for water and, therefore, it is not preferred to wash the modified EVOH resin with the water-containing solvent. Therefore, the modified EVOH resin can be prepared as containing an intended amount of sodium acetate by employing the washing liquid, the bath ratio, the washing temperature, the washing period, and

the number of times of the washing described above.

In the present disclosure, it tends to be possible to control the transparency of a solution of the modified EVOH resin to be described later and the gas barrier property of the modified EVOH resin, particularly, at a higher humidity by adjusting the washing degree after the saponification and the neutralization.

In the present disclosure, the particulate product thus produced may be dispersed again in an alcohol or the like after the washing, and the saponification reaction may be allowed to further proceed with the alkali catalyst added in order to increase the saponification degree.

Thus, the EVOH resin is produced as having a vinyl alcohol unit converted from the vinyl ester unit in the ethylene-vinyl ester copolymer by the saponification.

Where the monomer having the hydroxyl group protected with the ester or the like is copolymerized with the other monomers in the method (I), the ester or the like of the protected monomer is also saponified for deprotection, and is converted into the side-chain primary hydroxyl group structure, whereby the modified EVOH resin according to the present disclosure can be prepared. The modified EVOH resin according to the present disclosure is merely required to have a specific amount of the side-chain primary hydroxyl group, and a small amount of the ester group may remain in the modified EVOH resin without complete deprotection.

In the method (II), the prepared EVOH resin is allowed to react, for example, with a monovalent epoxy group-containing compound. The reaction method is not particularly limited, but preferred examples thereof include a method in which the reaction is allowed to proceed in a solution, and a method in which the reaction is allowed to proceed in an extruder. In the method in which the reaction is allowed to proceed in the extruder, it is also preferred to use a catalyst containing ions of a metal belonging to Group 3 to Group 12 in the Periodic Table.

Preferred examples of the monovalent epoxy group-containing compound include propylene oxide, butylene oxide, and glycidol. These may be each used alone, or two or more of these may be used in combination. Of these, propylene oxide is preferred.

Where propylene oxide is used as the monovalent epoxy group-containing compound, for example, the resulting modified EVOH resin has a side-chain primary hydroxyl group-containing structural unit represented by the following general formula (4):

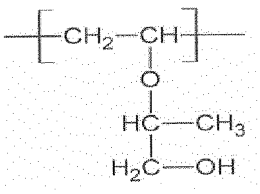

.....(4)

Thus, the modified EVOH resin having the side-chain primary hydroxyl group according to the present disclosure, specifically, the modified EVOH resin having the structural unit represented by the following general formula (1) can be prepared. In the present disclosure, the modified EVOH resin is merely required to contain a specific amount of the side-chain primary hydroxyl group, and may further contain some other types of hydroxyl group structures (a secondary hydroxyl group and a tertiary hydroxyl group) in its side chain.

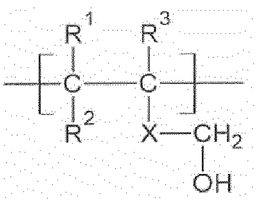

.....(1)

wherein $R^1$ to $R^3$ are each independently a hydrogen atom or an organic group, and X is a single bond or a bonding chain.

$R^1$ to $R^3$ are not particularly limited, as long as they are each a hydrogen atom or an organic group. Examples of the organic group include hydrocarbon groups such as alkyl groups, alkenyl groups, alkynyl groups, phenyl group, and naphthyl group (these hydrocarbon groups may each have a substituent such as hydroxyl group, fluorine, chlorine or bromine).

X which bonds the primary hydroxyl group structure to the polymer main chain is a single bond or a bonding chain. The bonding chain is not particularly limited, but examples of the bonding chain include hydrocarbons such as alkylenes, alkenylenes, alkynylenes, phenylene, and naphthylene (these hydrocarbons may each have a substituent such as hydroxyl group, fluorine, chlorine or bromine), oxyalkylenes, oxyalkenylenes, oxyalkynylenes, oxyphenylene,

and oxynaphthylene each having an ether bond for bonding to the polymer main chain (these hydrocarbons may each have a substituent such as hydroxyl group, fluorine, chlorine or bromine), -CO-, $-CO(CH_2)_mCO-$, $-CO(CH_2)_mCOR^4-$, $-NR^5-$, and $-CONR^5-$ (wherein $R^4$ and $R^5$ are each independently a given substituent and are each preferably a hydrogen atom or an alkyl group, and m is a natural number).

The proportion of the ethylene structural unit in the modified EVOH resin according to the present disclosure is 1 to 16.5 mol %, preferably 3 to 16 mol %, more preferably 5 to 15.5 mol %, and particularly preferably 6 to less than 15.0 mol %.

If the proportion of the ethylene structural unit is excessively small, the viscosity of a solution of the modified EVOH resin to be used for formation of a layer of the modified EVOH resin as will be described later is liable to be less stable. If the proportion of the ethylene structural unit is excessively great, the hydrophilicity of the modified EVOH resin is liable to be reduced, so that the biodegrading microbes cannot easily access the polymer main chain. This deteriorates the biodegradability and the gas barrier property.

The proportion of the ethylene structural unit in the modified EVOH resin can be controlled by adjusting the ethylene pressure during the copolymerization.

The proportion of the side-chain primary hydroxyl group-containing structural unit in the modified EVOH resin according to the present disclosure is not less than 2.5 mol %, preferably 2.5 to 10 mol %, particularly preferably 3 to 6 mol %.

If the proportion of the side-chain primary hydroxyl group-containing structural unit is excessively small, the modified EVOH resin is liable to have an insufficient hydrophilicity and hence a lower biodegradability. If the proportion of the side-chain primary hydroxyl group-containing structural unit is excessively great, the production costs are economically disadvantageously increased.

The proportion of the ethylene structural unit in the modified EVOH resin and the proportion of the side-chain primary hydroxyl group-containing structural unit in the modified EVOH resin are determined based on an integration ratio between a $^1H$-NMR spectrum and a $^{13}C$-NMR spectrum measured at 50°C with the use of a solution prepared by dissolving the modified EVOH resin in dimethyl sulfoxide-d6 containing trifluoroacetic acid-d as an additive.

As a specific example, a modified EVOH resin having the side-chain primary hydroxyl group-containing structural unit represented by the following general formula (2) will be described.

FIGS. 1 and 2 are a $^1H$-NMR spectrum (FIG. 1) and a $^{13}C$-NMR spectrum (FIG. 2) obtained by NMR measurement of the modified EVOH resin having the side-chain primary hydroxyl group-containing structural unit represented by the general formula (2) at 50°C.

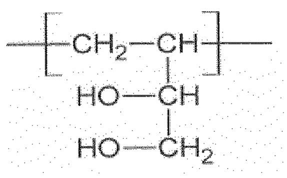

.....(2)

Signals in the $^1H$-NMR spectrum (FIG. 1) are attributable to the following protons:

- 0.7 to 0.9 ppm: Methyl proton (3H) in the terminal ethylene structural unit
- 0.9 to 1.7 ppm: Methylene proton (4H) in the intermediate ethylene structural unit, methylene proton (2H) in the vinyl alcohol structural unit, methylene proton (2H) in the unsaponified vinyl acetate structural unit, and main chain methylene proton (2H) in the 1,2-butenediol structural unit
- 1.7 to 1.9 ppm: Main chain methine proton (1H) in the 1,2-butenediol structural unit
- 1.9 to 2.0 ppm: Methyl proton (3H) in the unsaponified vinyl acetate structural unit
- 3.2 to 4.2 ppm: Methine proton (1H) in the vinyl alcohol structural unit, and methylene proton (2H) and methine proton (1H) adjacent to the hydroxyl group in the 1,2-butenediol structural unit

Further, signals in the $^{13}C$-NMR spectrum (FIG. 2) are attributable to the following carbons:

- 8 to 10 ppm: Methyl carbon in the terminal ethylene structural unit
- 20 to 48 ppm: Methylene carbon in the intermediate ethylene structural unit, methylene carbon in the vinyl alcohol structural unit, methylene carbon and methyl carbon in the unsaponified vinyl acetate structural unit, and main chain methylene carbon and main chain methine carbon in the 1,2-butenediol structural unit
- 63 to 64 ppm: Methylene carbon adjacent to the primary hydroxyl group in the 1,2-butenediol structural unit
- 64 to 75 ppm: Methine carbon in the vinyl alcohol structural unit, methine carbon in the unsaponified vinyl acetate structural unit, and methine carbon adjacent to the secondary hydroxyl group in the 1,2-butenediol structural unit

The proportion of the ethylene structural unit in the modified EVOH resin and the proportion of the side-chain primary hydroxyl group-containing structural unit in the modified EVOH resin can be determined by solving the following simultaneous equations based on the attributions of the signals in the $^1$H-NMR spectrum and the $^{13}$C-NMR spectrum.

$$a = 4E + 2V + 3D$$

$$b = V + 3D$$

$$c = (V + D)/D$$

a: An integrated value of the signals at 0.9 to 1.7 ppm in the $^1$H-NMR spectrum (FIG. 1)
b: An integrated value of the signals at 3.2 to 4.2 ppm in the $^1$H-NMR spectrum (FIG. 1)
c: A value obtained by dividing an integrated value of the signals at 64 to 75 ppm by an integrated value of the signals at 63 to 64 ppm in the $^{13}$C-NMR spectrum (FIG. 2)

E: The molar ratio of the ethylene unit
V: The molar ratio of the vinyl alcohol unit
D: The molar ratio of the 1,2-butenediol unit (the side-chain primary hydroxyl group-containing structural unit)

In the method (I), the proportion of the side-chain primary hydroxyl group-containing structural unit can be controlled by adjusting the feeding amount of the monomer containing the side-chain primary hydroxyl group or the monomer having the hydroxyl group protected with the ester or the like to be used as the comonomer. In the method (II), the proportion of the side-chain primary hydroxyl group-containing structural unit can be controlled by adjusting the amount of the monovalent epoxy group-containing compound to be used for the modification.

The amount of sodium acetate contained in the modified EVOH resin is preferably less than 0.7 mass %, particularly preferably less than 0.4 mass %, more preferably less than 0.2 mass %, If the amount of sodium acetate is greater than 0.7 mass %, it will be impossible to prepare a transparent solution of the modified EVOH resin for formation of a gas barrier material which will be described later, so that the resulting gas barrier material tends to have a poorer appearance. Further, with the greater amount of sodium acetate, the resulting gas barrier material tends to have a poorer gas barrier property due to interaction between moisture and sodium acetate, particularly, at a higher humidity. The amount of sodium acetate contained in the modified EVOH resin can be determined by titration of a sample solution with hydrochloric acid in conformity with JIS K6726.

A 4 mass % aqueous solution of the modified EVOH resin typically has a viscosity of 2.50 to 600 mPa•s, preferably 2.90 to 270 mPa•s, particularly preferably 3.30 to 110 mPa•s, as measured by the falling-ball viscometer method of JIS K6726. If the viscosity is excessively high, resin applying defects are liable to occur when the solution of the modified EVOH resin is applied onto a base resin film to form the gas barrier material. If the viscosity is excessively low, the resulting gas barrier material tends to have a lower strength and a poorer durability.

The viscosity of the 4 mass % aqueous solution of the modified EVOH resin is an index of the polymerization degree of the modified EVOH resin. Where the proportions of the ethylene structural unit and the side-chain primary hydroxyl group-containing structural unit in the modified EVOH resin are such that the 4 mass % aqueous solution of the modified EVOH resin cannot be prepared, a melt flow rate (MFR) to be described below may be used as an index of the polymerization degree.

The melt flow rate (MFR) of the modified EVOH resin (as measured at 210°C with a load of 2160 g) is typically 0.1 g to 100 g/10 minutes, preferably 1 to 50 g/10 minutes, particularly preferably 3 to 35 g/10 minutes. If the MFR is excessively great, it tends to be difficult to control the thickness of the layer of the modified EVOH resin when the barrier material is produced by the melt forming. If the MFR is excessively small, a higher load is liable to be exerted on the forming machine in the melt forming.

The MFR is the index of the polymerization degree of the modified EVOH resin, and can be controlled by adjusting the amount of a polymerization catalyst for the copolymerization of the comonomers and/or the amount of the solvent.

The saponification degree of the modified EVOH resin according to the present disclosure is typically not less than 85 mol %, preferably not less than 90 mol %, particularly preferably not less than 95 mol %, especially preferably not less than 99 mol %. If the saponification degree is excessively low, the gas barrier property tends to be reduced, particularly, under high-humidity conditions, as will be described later.

The saponification degree of the modified EVOH resin according to the present disclosure can be determined

in conformity with JIS K6726 based on an alkali consumption associated with the hydrolysis of the residual vinyl acetate unit.

The modified EVOH resin according to the present disclosure preferably has a biodegradability of not less than 20%, more preferably not less than 25%, particularly preferably not less than 30%. The biodegradability is determined based on a biochemical oxygen consumption and a theoretical oxygen demand determined by tests performed under the following conditions with reference to a method described in JIS K6950.

- Device: BOD TESTER 200F (available from Taitec Corporation)
- Microbe source: Sludge recovered from sewage treatment plant in which domestic sewage is treated
- Standard test culture solution: 100 mL
- Microbe concentration: 90 mg/L
- Temperature: 25 ± 1°C
- Period: 28 days

Further, the modified EVOH resin according to the present disclosure can be compounded with some other components to provide a resin composition. Examples of the other components include other thermoplastic resin, plasticizer, lubricant, stabilizer, surfactant, colorant, UV absorber, antistatic agent, desiccant, crosslinking agent, metal salt, filler, and various kinds of fibers. These may be each used alone, or two or more of these may be used in combination.

The proportion of the modified EVOH resin in the resin composition is typically not less than 80 mass %, preferably not less than 90 mass %, more preferably not less than 95 mass %. The upper limit of the proportion is 100 mass %.

The modified EVOH resin according to the present disclosure can be advantageously used for gas barrier materials such as food packaging materials. A method for producing such a gas barrier material from the modified EVOH resin according to the present disclosure is not particularly limited, but exemplary methods include: (i) a method in which the gas barrier material is produced by applying a solution of the modified EVOH resin on a film of a base resin to form a layer of the modified EVOH resin and drying the layer; and (ii) a method in which the gas barrier material is formed by melt-forming the modified EVOH resin.

In the method (i), exemplary solvents to be used for the solution of the modified EVOH resin include water, and C1 to C5 lower alcohols such as methanol, ethanol, 1-propanol, 2-propanol, 1-butanol, and 2-butanol. These may be each used alone, or two or more of these may be used in combination. Of these, water, 2-propanol, and a solvent mixture of water and 2-propanol are preferred, and a solvent containing water and 2-propanol in a mixing ratio (mass ratio) calculated from the following expression (1) is particularly preferred:

$$(\text{Water}) : (\text{2-Propanol}) = (100 - X) : X \quad .....(1)$$

wherein X = 3.4 × (Proportion of ethylene structural unit) - 5 × (Proportion of primary hydroxyl group-containing structural unit) - 20 and, if X is negative, X = 0.

The inventors found that the side-chain primary hydroxyl group-containing structural unit is effective in reducing the necessary amount of 2-propanol when a homogeneous solution is prepared by using the solvent mixture of water and 2-propanol. The above expression (1) is derived from a relationship between the proportion of the ethylene structural unit and the proportion of the side-chain primary hydroxyl group-containing structural unit in the modified EVOH resin.

Where 2-propanol which is an organic solvent is used for the preparation of the solution of the modified EVOH resin, it is necessary to recover 2-propanol used for the application of the solution. Therefore, it is preferred to use the solvent having the mixing ratio calculated from the above expression (1) in order to reduce the use amount of 2-propanol as much as possible.

The solution of the modified EVOH resin is preferably transparent for improvement of the appearance of the gas barrier material. The transparency of the solution of the modified EVOH resin can be determined by measuring the transmittance of the solution having a concentration of 4 mass %.

A solution prepared by dissolving the modified EVOH resin at a concentration of 4 mass % in the solvent having the mixing ratio calculated from the above expression (1) preferably has a transmittance of not less than 70%, more preferably not less than 75%, particularly preferably not less than 80%, as measured at 430 nm with an optical path length of 20 mm. If the transmittance is less than the above numerical value, the resulting gas barrier material tends to have a turbid appearance.

The transmittance is measured in conformity with JIS K6726. If water is used alone as the solvent for dissolving a modified EVOH resin having a greater proportion of the ethylene structural unit, however, it is impossible to provide a uniform aqueous solution. For this reason, the solvent having the mixing ratio calculated from the above expression (1) is used.

The transmittance of the solution containing the modified EVOH resin at a concentration of 4 mass % can be controlled by adjusting the proportion of the ethylene structural unit and the proportion of the side-chain primary hydroxyl group-containing structural unit in the modified EVOH resin, the temperature, the solid concentration of the solution, and the types and the mixing ratio of the solvents, or by reducing the amount of the salt such as sodium acetate resulting from the neutralization after the saponification.

Exemplary methods for the application of the solution of the modified EVOH resin include known methods such as bar coater method, roll coating method, die coating method, gravure coating method, comma coating method, and screen printing method. Of these, the bar coater method is preferred.

After the application of the solution, the resulting layer is heated, for example, at 60°C to 105°C for 0.5 to 10 minutes to be dried, whereby the gas barrier material having the layer of the modified EVOH resin can be produced.

Exemplary melt-forming methods to be used in the method (ii) include extrusion forming method, injection forming method, inflation forming method, press forming method, and blow forming method.

Thus, the gas barrier material having the layer of the modified EVOH resin according to the present disclosure is produced. The gas barrier material may be a gas barrier material of a single layer structure or a gas barrier material of a multilayer structure, but preferably has a multilayer structure. The barrier material of the multilayer structure preferably includes at least one layer of the modified EVOH resin according to the present disclosure. The gas barrier material of the multilayer structure may be a laminate including layers of the modified EVOH resin according to the present disclosure, or may be a laminate including the layer of the modified EVOH resin according to the present disclosure and a layer of some other base resin.

Examples of the base resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin (C4 to C20 $\alpha$-olefin) copolymers, polypropylene resins such as polypropylenes and propylene-$\alpha$-olefin (C4 to C20 $\alpha$-olefin) copolymers, polybutenes, polypentenes, and polycycloolefin resins (polymers having a cycloolefin structure in a main chain and/or a side chain thereof); polyolefin resins in a broader sense including modified olefin resins such as unsaturated carboxylic acid-modified polyolefin resins obtained by graft-modifying any of the aforementioned polyolefin resins with an unsaturated carboxylic acid or an unsaturated carboxylic acid ester; and ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These may be each used alone, or two or more of these may be used in combination. The layer of any of these base resins may be subjected to a surface treatment such as corona treatment.

The layer of the modified EVOH resin typically has a thickness of 1 to 200 $\mu$m, preferably 1 to 100 $\mu$m, particularly preferably 1 to 50 $\mu$m. Where the gas barrier material is of the multilayer structure, the total thickness of the layers of the modified EVOH resin included in the gas barrier material falls within the aforementioned thickness range.

The layer of the modified EVOH resin preferably has an oxygen transmission rate of not greater than 5 cc•3$\mu$m/m$^2$•day•atm, more preferably not greater than 1 cc•3$\mu$m/m$^2$•day•atm, still more preferably not greater than 0.1 cc•3$\mu$m/m$^2$•day•atm, as measured in an environment at 23°C at 0% RH. The lower limit of the oxygen transmission rate is typically 0.003 cc•3$\mu$m/m$^2$•day•atm. The oxygen transmission rate can be determined by an oxygen transmission rate measuring device.

Further, the gas barrier material is used under various conditions ranging from a lower humidity environment to a higher humidity environment. Therefore, the gas barrier material preferably has a lower oxygen transmission rate even at a higher temperature, and is preferably less liable to change in oxygen transmission rate with respect to a change in humidity. From this viewpoint, the oxygen transmission rate is preferably not greater than 30 cc•3$\mu$m/m$^2$•day•atm, more preferably not greater than 15 cc•3$\mu$m/m$^2$•day•atm, particularly preferably not greater than 5 cc•3$\mu$m/m$^2$•day•atm, as measured in an environment at 23°C at 65% RH.

The ratio of the oxygen transmission rate measured at 23°C at 65% RH to the oxygen transmission rate measured at 23°C at 0% RH is preferably not greater than 500, more preferably not greater than 300, particularly preferably not greater than 200.

EXAMPLES

The embodiments of the present disclosure will hereinafter be described more specifically by way of examples thereof. However, it should be understood that the present disclosure be not limited to the following examples within the scope of the disclosure. In the following examples, "parts" is based on mass, unless otherwise specified.

<Example 1>

[Synthesis of Modified Ethylene-Vinyl Ester Copolymer]

In a temperature-controllable autoclave, 460 parts of vinyl acetate, 48 parts of 3,4-diacetoxy-1-butene as the monomer having the hydroxyl group protected with the ester or the like, and 75 parts of methanol were fed, and the system (the inside of the autoclave) was replaced with nitrogen gas and then with ethylene. While the resulting mixture was stirred, the temperature of the system was increased to 67°C. After the temperature increase, ethylene was injected into the system to a partial pressure of 1.0 MPa, and a solution prepared by dissolving 0.082 parts of 2,2'-azobisisobutyronitrile in 10 parts of methanol was added to the system. While the resulting mixture was stirred, the inside temperature of the system was maintained at 67°C for four hours. Thereby, the polymerization reaction was allowed to proceed. Thereafter, a solution prepared by dissolving 0.98 parts of sorbic acid in 100 parts of methanol was fed into the system, and the resulting mixture was cooled to a room temperature (23°C) to terminate the polymerization. Unreacted portions of the monomers were distilled away. Thus, a methanol solution of an ethylene-vinyl acetate-3,4-diacetoxy-1-butene copolymer was prepared as a modified ethylene-vinyl ester copolymer.

[Synthesis of Modified EVOH Resin]

Next, the solution thus prepared was diluted with methanol to a concentration of 10 mass % with stirring. With the temperature of the resulting solution maintained at 45°C, a 5 mass % methanol solution of sodium hydroxide was added to the resulting solution in a sodium hydroxide amount of 10 mmol equivalent based on the amount of the vinyl acetate unit in the copolymer, and the saponification reaction was allowed to proceed. As the saponification reaction proceeded, a saponification product was precipitated and, finally, in a particulate form. In order to allow the saponification reaction to further proceed, the particulate saponification product thus produced was once filtered out, and then was dispersed again in a 20-fold amount of methanol based on the amount of the saponification product. Further, the 5 mass % methanol solution of sodium hydroxide was added to the resulting dispersion in a sodium hydroxide amount of 50 mmol equivalent based on the initial amount of the vinyl acetate unit in the copolymer, and the saponification reaction was allowed to proceed at 50°C for three hours. After the reaction, the resulting solution was neutralized with acetic acid, and the resulting particulate saponification product was filtered out again. Then, the resulting saponification product was washed with methanol for reducing the amount of sodium acetate adhering to the saponification product. For the washing, the particulate saponification product was dispersed in a 5-fold mass of methanol, and filtered out after the resulting dispersion was stirred at 45°C for one hour. This operation was repeated three times. The resulting saponification product was dried in a hot air dryer. Thus, a modified EVOH resin of Example 1 was produced. The modified EVOH resin thus produced had the following 1,2-diol structure as the side-chain primary hydroxyl group-containing structural unit.

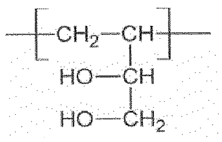

The saponification degree of the modified EVOH resin thus produced was 99.9 mol % as determined by analyzing an alkali consumption associated with the hydrolysis of the residual vinyl acetate unit in conformity with JIS K6726.

The amount of sodium acetate in the modified EVOH resin was 0.097 mass % as determined by titration of the sample solution with hydrochloric acid in conformity with JIS K6726.

The proportion of the ethylene structural unit and the proportion of the side-chain primary hydroxyl group-containing structural unit were determined by the aforementioned method based on a $^1$H-NMR spectrum (see FIG. 1) and a $^{13}$C-NMR spectrum (see FIG. 2) obtained by NMR measurement at 50°C with the use of a solution prepared by dissolving the modified EVOH resin thus produced in dimethyl sulfoxide-d6 containing trifluoroacetic acid-d as an additive. As a result, the proportion of the ethylene structural unit was 7.7 mol %, and the proportion of the 1,2-diol structural unit (side-chain primary hydroxyl group-containing structural unit) was 4.7 mol %.

The viscosity of a 4% concentration aqueous solution of the modified EVOH resin thus produced was 8.76 mPa•s as determined by the falling-ball viscometer method of JIS K6726.

<Examples 2 to 6 and Comparative Examples 1 to 6>

Methanol solutions of modified ethylene-vinyl ester copolymers of Examples 2 to 6 and Comparative Examples 3 to 6 and ethylene-vinyl ester copolymers of Comparative Examples 1 and 2 from which unreacted portions of the

monomers were distilled away were produced in substantially the same manner as in Example 1, except that the polymerization conditions were changed as shown below in Table 1. In Examples 2 to 6 and Comparative Examples 2 to 6, the saponification, the washing, and the drying were carried out in the same manner as in Example 1, whereby modified EVOH resins and EVOH resins as shown in Table 2 were produced.

The 4% concentration aqueous solution of the modified EVOH resin of Example 4 had a viscosity of 13.94 mPa•s, and the 4 % concentration aqueous solution of the modified EVOH resin of Example 6 had a viscosity of 9.03 mPa•s as determined by the falling-ball viscometer method of JIS K6726.

In Comparative Example 1, methanol was added to the methanol solution of the ethylene-vinyl ester copolymer produced in the aforementioned manner from which the unreacted portions of the monomers were distilled away, whereby a 15 mass % methanol solution of the ethylene-vinyl ester copolymer was prepared. A 5 mass % methanol solution of sodium hydroxide was added to the resulting solution in a sodium hydroxide amount of 50 mmol equivqlent based on the amount of the vinyl acetate unit in the copolymer, and the resulting solution was refluxed for 1 hour for saponification. At this time, the solution was maintained in a solution form with no saponification product precipitated. Thereafter, methanol was further added to the resulting solution, which was in turn evaporated at 60°C to be concentrated. In order to allow the saponification reaction to further proceed, the 5 mass % methanol solution of sodium hydroxide was added to the resulting solution in a sodium hydroxide amount of 50 mmol equivqlent based on the amount of the vinyl acetate unit in the copolymer, and then the resulting solution was refluxed for one hour. At this time, the resulting solution was still in a solution form with no saponification product precipitated. Thereafter, methanol was further added to the resulting solution, which was in turn evaporated at 60°C to be concentrated. Then, the resulting solution was solidified in an ice bath. The resulting solid product was pulverized, and washed with a 2 mass % aqueous solution of acetic acid and then with ion-exchanged water. After this operation was repeated, the resulting product was dried. Thus, the EVOH resin of Comparative Example 1 was produced.

The proportion of the ethylene structural unit, the proportion of the side-chain primary hydroxyl group-containing structural unit, the saponification degree, and the amount of sodium acetate were determined for each of the modified EVOH resins of Examples 2 to 5 and Comparative Examples 3 to 6 and the EVOH resins of Comparative Examples 1 and 2 in the same manner as in Example 1. The results are shown below in Table 2.

The proportion of the ethylene structural unit and the proportion of the side-chain primary hydroxyl group-containing structural unit in the modified EVOH resin of Example 6 were determined in accordance with JP-A-2019-182947. A $^1$H-NMR spectrum of the modified ethylene-vinyl ester copolymer as the intermediate product of Example 6 measured at 50°C (with the use of dimethyl sulfoxide-d6 as a solvent) is shown in FIG. 3, and a $^1$H-NMR spectrum of the modified EVOH resin of Example 6 measured at 50°C (with the use of dimethyl sulfoxide-d6 as a solvent and trifluoroacetic acid-d as an additive) is shown in FIG. 4.

Table 1

| | Example 1 | Example 2 | Example 3 | Example 4 | Example 5 | Example 6 |
|---|---|---|---|---|---|---|
| Vinyl acetate (parts) | 460 | 460 | 460 | 460 | 460 | 460 |
| Monomer having hydroxyl group protected with ester or the like | | | | | | |
| Type | 3,4-Diacetoxy-1-butene | 3,4-Diacetoxy-1-butene | 3,4-Diacetoxy-1-butene | 3,4-Diacetoxy-1-butene | 3,4-Diacetoxy-1-butene | 2-Methylene-1,3-propanediol diacetate |
| Amount (parts) | 48 | 42 | 32 | 48 | 36 | 18 |
| Methanol (parts) | 75 | 75 | 75 | 75 | 132 | 75 |
| Ethylene partial pressure (MPa) | 1.0 | 2.0 | 1.0 | 0.3 | 1.4 | 1.0 |
| 2,2'-Azobisisobutyronitrile (parts) | 0.082 | 0.352 | 0.082 | 0.082 | - | 0.082 |
| t-Butyl peroxyneodecanoate (parts) | - | - | - | - | 0.129 | - |
| Polymerization period (hours) | 4 | 4 | 1 | 2 | 4 | 2 |

Table 1 (Continued)

| | Comparative Example 1 | Comparative Example 2 | Comparative Example 3 | Comparative Example 4 | Comparative Example 5 | Comparative Example 6 |
|---|---|---|---|---|---|---|
| Vinyl acetate (parts) | 460 | 460 | 460 | 460 | 460 | 460 |
| Monomer having hydroxyl group protected with ester or the like | | | | | | |
| Type | - | - | 3,4-Diacetoxy-1-butene | 3,4-Diacetoxy-1-butene | 3,4-Diacetoxy-1-butene | 3,4-Diacetoxy-1-butene |
| Amount (parts) | - | - | 48 | 74 | 48 | 16 |
| Methanol (parts) | 75 | 75 | 75 | 151 | 75 | 75 |
| Ethylene partial pressure (MPa) | 3.8 | 1.0 | 2.8 | - | 2.8 | 1.5 |
| 2,2'-Azobisisobutyronitrile (parts) | 0.082 | 0.082 | 0.176 | 0.108 | 0.082 | 0.176 |
| t-Butyl peroxyneodecanoate (parts) | - | - | - | - | - | - |
| Polymerization period (hours) | 1 | 1 | 4 | 4 | 4 | 2 |

The resins of Examples and Comparative Examples produced in the aforementioned manner were each evaluated for transparency, oxygen transmission rate, the humidity dependence of gas barrier property, and biodegradability by the following evaluation methods. The results of the evaluation are shown below in Table 2.

[Transparency]

A 4 mass % concentration solution of each of the resins of Examples and Comparative Examples was prepared with the use of a solvent containing water and 2-propanol in a mixing ratio (mass ratio) calculated from the following expression (1):

$$(\text{Water}) : (\text{2-Propanol}) = (100 - X) : X \;.....(1)$$

wherein X = 3.4 × (Proportion of ethylene structural unit) - 5 × (Proportion of primary hydroxyl group-containing structural unit) - 20 and, if X is negative, X = 0.

The transmittance of the 4 mass % concentration solution of the resin thus prepared was measured at 430 nm at 30°C with an optical path length of 20 mm, and defined as the transparency of the solution.

The proportion of 2-propanol shown below in the column "transparency" in Table 2 was calculated from the above expression (1).

[Production of Gas Barrier Material]

The resins of Examples and Comparative Examples were each dissolved in a solvent prepared based on the above expression (1), whereby a 10 mass % concentration solution was prepared. The solution was applied onto a corona-treated PET film (having a thickness of 38 μm) by a bar coater, and the resulting film was dried at 80°C for five minutes. Thus, a gas barrier material having a 3-μm thick layer of the modified EVOH resin or the EVOH resin was produced.

[Gas Barrier Property and its Humidity Dependence]

The oxygen transmission rate of the gas barrier material produced in the aforementioned manner was measured

at a temperature of 23°C at humidities of 0% RH and 65% RH by means of an oxygen transmission rate measuring device (OXTRAN 2 available from MOCON Inc.), and employed as an index of the gas barrier property, which was converted to a value corresponding to a 3 μm-thick layer of the modified EVOH resin or the EVOH resin. The oxygen transmission rates at humidities of 0% RH and 65% RH were defined as T0% and T65%, respectively, and the ratio T65%/T0% was employed as an index of the humidity dependence of the gas barrier property.

[Biodegradability]

The modified EVOH resins and the EVOH resins of Examples and Comparative Examples were each evaluated for biodegradability under the following conditions with reference to the method described in JIS K6950.

- Device: BOD TESTER 200F (available from Taitec Corporation)
- Microbe source: Sludge recovered from sewage treatment plant in which domestic sewage is treated
- Standard test culture solution: 100 mL
- Microbe concentration: 90 mg/L
- Temperature: 25 ± 1°C
- Period: 28 days

The biodegradability was determined based on a biochemical oxygen consumption and a theoretical oxygen demand.

Table 2

| | Example 1 | Example 2 | Example 3 | Example 4 | Example 5 | Example 6 |
|---|---|---|---|---|---|---|
| Proportion of ethylene structural unit (mol %) | 7.7 | 15.7 | 7.5 | 2 | 11.4 | 7.6 |
| Side-chain primary hydroxyl group-containing structural unit | | | | | | |
| Structure* | (1) | (1) | (1) | (1) | (1) | (2) |
| Proportion (mol %) | 4.7 | 3.7 | 3.3 | 5.3 | 3.2 | 3.9 |
| Saponification degree (mol %) | 99.9 | 99.8 | 99.8 | 99.9 | 99.9 | 99.7 |
| Amount of sodium acetate (mass %) | 0.097 | 0.076 | 0.034 | 0.086 | 0.08 | 0.085 |
| Transparency | | | | | | |
| Proportion of 2-propanol (mass %) | 0 | 14.9 | 0 | 0 | 2.8 | 0 |
| Transmittance (%) | 96.6 | 80.8 | 81.3 | 92.5 | 76.9 | 83.8 |
| Gas barrier property (cc•3μm/$m^2$•day•atm) | | | | | | |
| 0% RH (T0%) | 0.06 | 0.05 | 0.02 | 0.02 | 0.03 | 0.03 |
| 65% RH (T65%) | 3.5 | 2.3 | 1.5 | 3.2 | 1.7 | 1.9 |
| Humidity dependence of gas barrier property | | | | | | |
| T65%/T0% | 58 | 46 | 75 | 160 | 57 | 63 |
| Biodegradability (%) | 65 | 36 | 72 | 65 | 51 | 64 |

* (1)

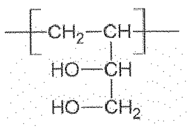

(2)

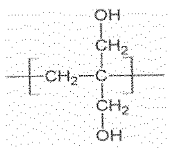

Table 2 (Continued)

| | Comparative Example 1 | Comparative Example 2 | Comparative Example 3 | Comparative Example 4 | Comparative Example 5 | Comparative Example 6 |
|---|---|---|---|---|---|---|
| Proportion of ethylene structural unit (mol %) | 25 | 6.6 | 20.2 | 0 | 16.8 | 11.5 |
| Side-chain primary hydroxyl group-containing structural unit | | | | | | |
| Structure* | - | - | (1) | (1) | (1) | (2) |
| Proportion (mol %) | - | - | 4.2 | 8 | 4.4 | 1.7 |
| Saponification degree (mol %) | 99.8 | 99.9 | 99.9 | 99.8 | 99.9 | 99.8 |
| Amount of sodium acetate (mass %) | 0.018 | 0.033 | 0.103 | 0.035 | 0.09 | 0.076 |
| Transparency | | | | | | |
| Proportion of 2-propanol (mass %) | 65 | 2.4 | 27.7 | 0 | 15.1 | 10.6 |
| Transmittance (%) | 91.2 | 5 | 97.1 | 94.4 | 84.3 | 72.9 |
| Gas barrier property (cc•3μm/m$^2$•day•atm) | | | | | | |
| 0% RH (T0%) | 0.26 | 0.03 | 0.2 | 0.02 | 0.1 | 0.07 |
| 65% RH (T65%) | 2.6 | 1.5 | 2.6 | 5.8 | 2.4 | 1.6 |
| Humidity dependence of gas barrier property | | | | | | |
| T65%/T0% | 10 | 50 | 13 | 290 | 24 | 23 |
| Biodegradability (%) | 5 | 11 | 14 | 15 | 10 | 19 |

* (1)

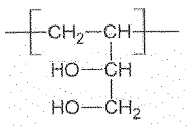

(2)

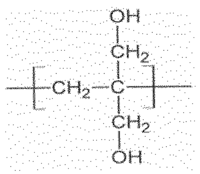

As can be understood from Table 2, the modified EVOH resins of Examples 1 to 6 in which the proportion of the ethylene structural unit falls within the specific range and a specific proportion of the side-chain primary hydroxyl group-containing structural unit is introduced can be each formed into a gas barrier material excellent in appearance because the resin solution is highly transparent. The modified EVOH resins of Examples 1 to 6 each have an excellent biodegradability, a lower oxygen transmission rate, and a less humidity-dependence of the gas barrier property.

On the other hand, the ordinary EVOH resin of Comparative Example 1 and the modified EVOH resin of Comparative Example 3 in which the proportion of the ethylene structural unit is greater than the range specified by the present disclosure are poorer in biodegradability and gas barrier property than the modified EVOH resins of Examples. The EVOH resin of Comparative Example 2 which contains the ethylene structural unit in a proportion within the range specified by the present disclosure but contains no side-chain primary hydroxyl group is poorer in biodegradability than the modified EVOH resins of Examples.

In contrast, the resin of Comparative Example 4 which contains the side-chain primary hydroxyl group-containing structural unit in a proportion within the range specified by the present disclosure but contains no ethylene structural unit, and the modified EVOH resins of Comparative Examples 5 and 6 which each contain the ethylene structural unit and the side-chain primary hydroxyl group-containing structural unit but in proportions falling outside the ranges specified by the present disclosure are poorer in biodegradability than the modified EVOH resins of Examples.

While specific forms of the embodiments of the present disclosure have been shown in the aforementioned examples, the examples are merely illustrative of the disclosure but not limitative of the disclosure. It is contemplated that various modifications apparent to those skilled in the art could be made within the scope of the disclosure.

The modified EVOH resin according to the present disclosure is useful for packaging materials because of its gas barrier property and excellent biodegradability, and can be advantageously used for packaging materials, particularly, for foods, medicines, and the like.

## Claims

1. A modified ethylene-vinyl alcohol resin having a primary hydroxyl group in its side chain, the modified ethylene-vinyl alcohol resin comprising:

   1 to 16.5 mol % of an ethylene structural unit; and
   not less than 2.5 mol % of a structural unit containing the side-chain primary hydroxyl group.

2. The modified ethylene-vinyl alcohol resin according to claim 1, which has a saponification degree of not less than 99 mol %.

3. The modified ethylene-vinyl alcohol resin according to claim 1 or 2, wherein sodium acetate is present in an amount of less than 0.7 mass %.

4. The modified ethylene-vinyl alcohol resin according to any one of claims 1 to 3, wherein a solution prepared by dissolving the modified ethylene-vinyl alcohol resin at a concentration of 4 mass % in a solvent containing water and 2-propanol in a mixing mass ratio calculated from the following expression (1) has a transmittance of not less than 70% as measured at 30°C at 430 nm with an optical path length of 20 mm:

$$(\text{Water}) : (\text{2-Propanol}) = (100 - X) : X \quad .....(1)$$

   wherein X = 3.4 × (Proportion of ethylene structural unit) - 5 × (Proportion of primary hydroxyl group-containing structural unit) - 20 and, if X is negative, X = 0.

5. A gas barrier material having a layer made of the modified ethylene-vinyl alcohol resin according to any one of claims 1 to 4.

FIG.1

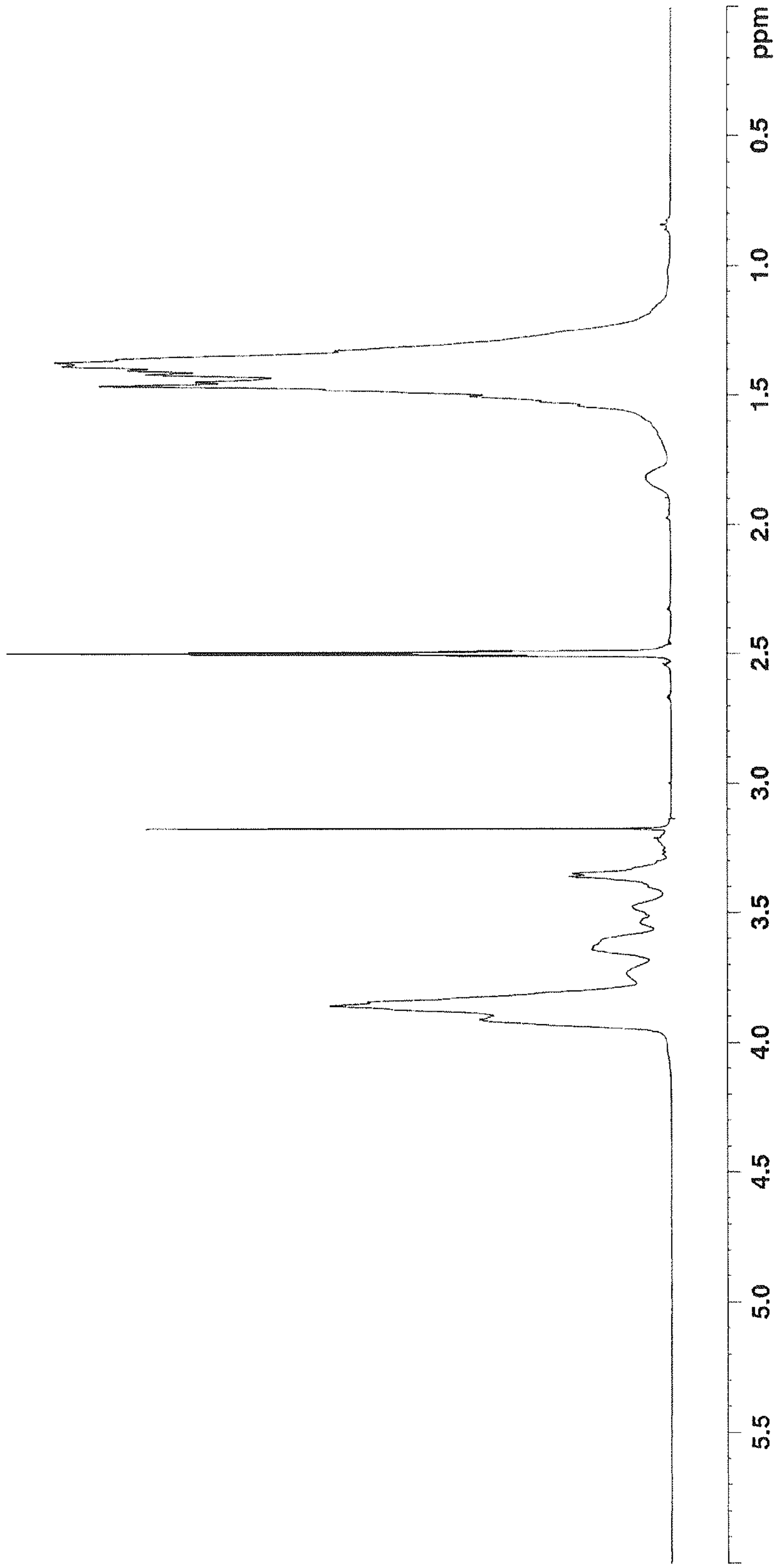

FIG.2

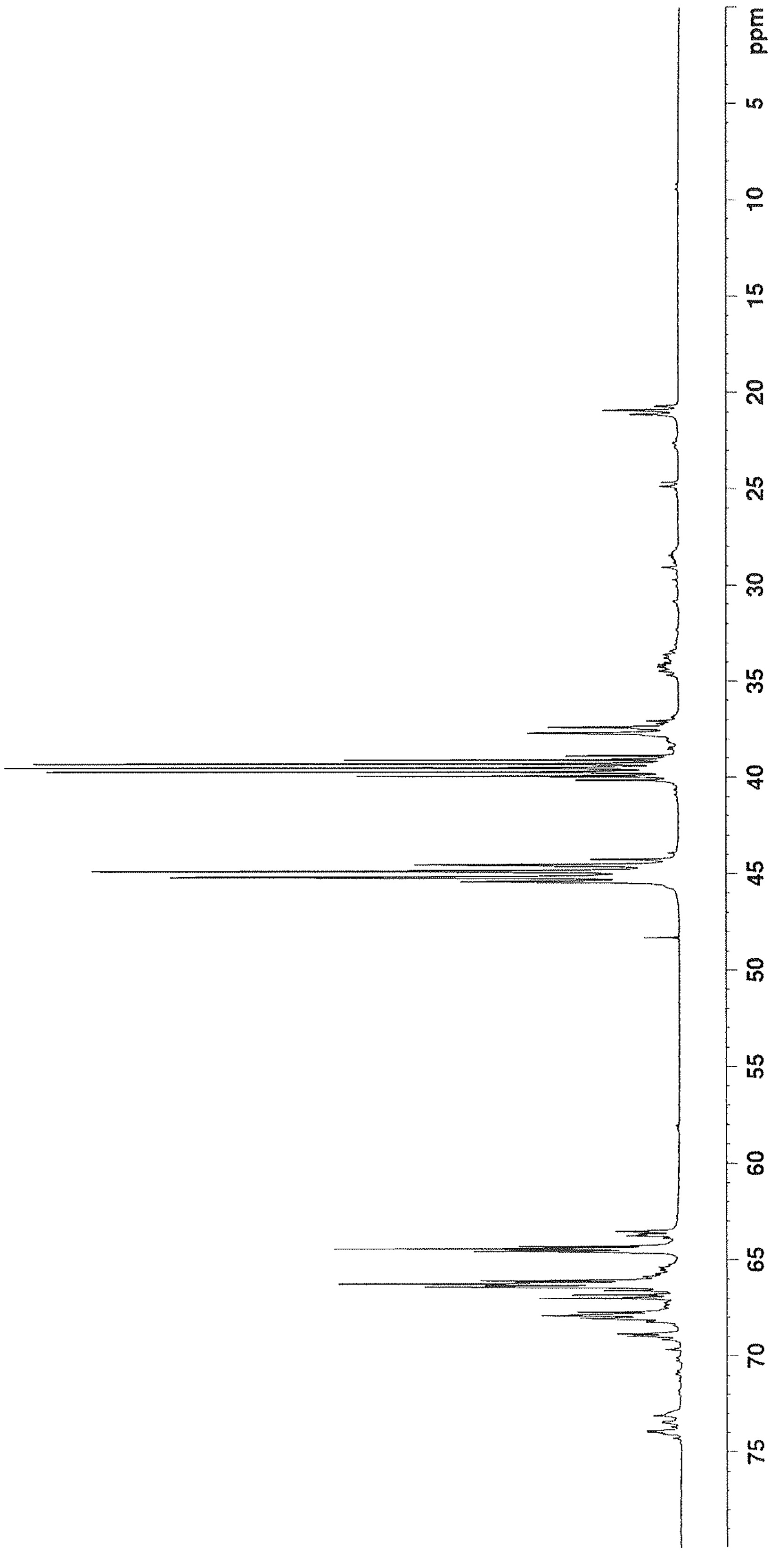

FIG.3

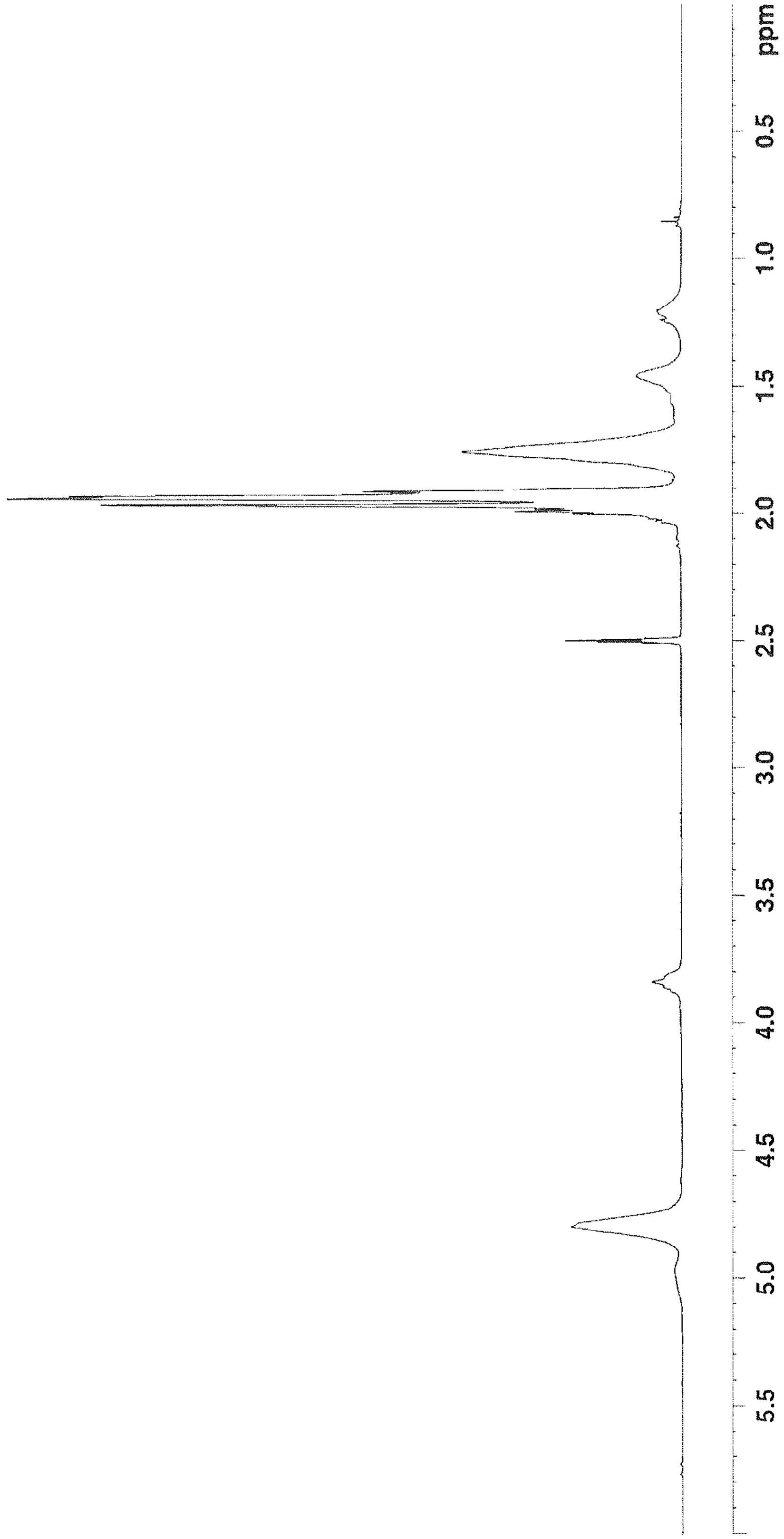

FIG.4

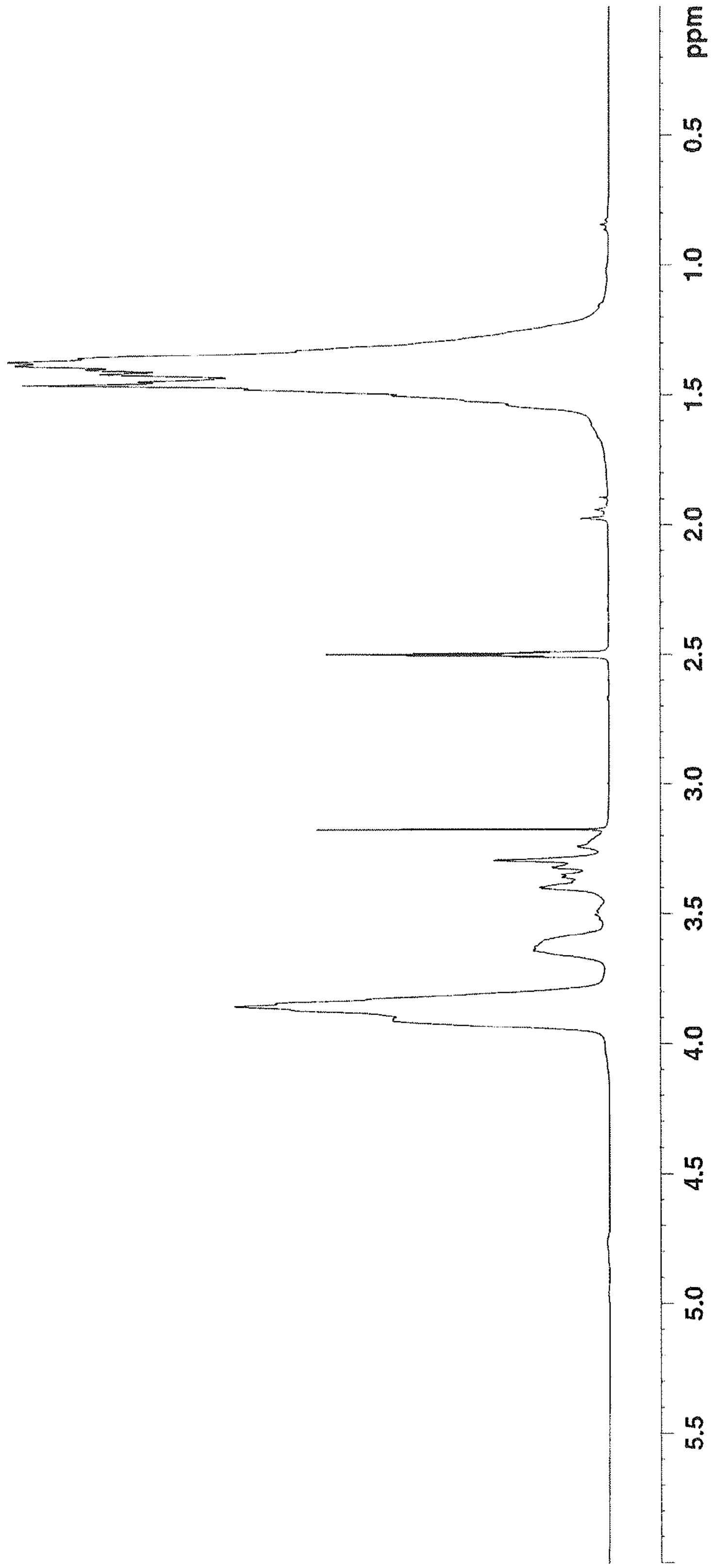

## INTERNATIONAL SEARCH REPORT

International application No.
**PCT/JP2021/019087**

**A. CLASSIFICATION OF SUBJECT MATTER**

***C08F 8/12***(2006.01)i; ***C08F 218/08***(2006.01)i; ***C08L 101/16***(2006.01)i
FI: C08F8/12 ZBP; C08F218/08; C08L101/16

According to International Patent Classification (IPC) or to both national classification and IPC

**B. FIELDS SEARCHED**

Minimum documentation searched (classification system followed by classification symbols)

C08F8/12; C08F218/08; C08L101/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-034262 A (KURARAY CO., LTD.) 19 February 2015 (2015-02-19) claims, examples | 1-5 |
| X | JP 2015-034263 A (KURARAY CO., LTD.) 19 February 2015 (2015-02-19) claims, examples | 1-5 |
| X | JP 2016-069481 A (THE NIPPON SYNTHETIC CHEMICAL INDUSTRY CO., LTD.) 09 May 2016 (2016-05-09) claims, examples | 1-5 |
| A | JP 2014-051319 A (KURARAY CO., LTD.) 20 March 2014 (2014-03-20) entire text | 1-5 |
| A | JP 2006-124668 A (THE NIPPON SYNTHETIC CHEMICAL INDUSTRY CO., LTD.) 18 May 2006 (2006-05-18) entire text | 1-5 |
| A | JP 2001-261745 A (KURARAY CO., LTD.) 26 September 2001 (2001-09-26) entire text | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2021** | **06 July 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

**INTERNATIONAL SEARCH REPORT**
**Information on patent family members**

International application No.
**PCT/JP2021/019087**

| Patent document cited in search report | Publication date (day/month/year) | Patent family member(s) | Publication date (day/month/year) |
|---|---|---|---|
| JP 2015-034262 A | 19 February 2015 | (Family: none) | |
| JP 2015-034263 A | 19 February 2015 | WO 2015/020220 A1<br>claims, examples | |
| JP 2016-069481 A | 09 May 2016 | (Family: none) | |
| JP 2014-051319 A | 20 March 2014 | US 2015/0210788 A1<br>full text<br>WO 2014/024912 A1<br>EP 2883886 A1<br>CN 104603163 A<br>TW 201412789 A<br>SG 11201500564U A<br>JP 2014-051647 A | |
| JP 2006-124668 A | 18 May 2006 | US 2007/0196679 A1<br>full text<br>WO 2006/035516 A1<br>EP 1801154 A1<br>CN 101027356 A<br>AU 2004323623 A<br>AT 522573 T<br>ES 2371024 T | |
| JP 2001-261745 A | 26 September 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000309607 A
- JP 2019182947 A


### Non-patent literature cited in the description


- Ethylene Vinyl Alcohol Copolymer Resin. New Development of Packaging Material having Gas Barrier Properties and Aroma Retaining Properties. Toray Research Center, Inc, 1997
- *Biosci. Biotech. Biochem.,* 1995, vol. 59 (7), 1229
- *Macromolecule,* 1999, vol. 32, 7753